# EUROPÄISCHE PATENTANMELDUNG

(11) **EP 2 246 121 A1**
(43) Veröffentlichungstag der Anmeldung: **03.11.2010**
(21) Anmeldenummer: 10157649.4
(22) Anmeldetag: 24.03.2010
(51) Int. Cl.: B05B 7/14, B65G 53/28, B65G 53/52, G01F 11/08, B65G 53/54, F04B 43/00, F04B 43/113

(54) **Förderer für ein Pulver-/Gasgemisch**

(30) Priorität: 03.04.2009 DE 102009016095
(71) Anmelder: Impellis GmbH & Co. KG Oberflächentechnik, 32805 Horn-Bad Meinberg (DE)
(72) Erfinder: Hartmann, Uwe, 32805, Horn-Bad Meinberg (DE)
(74) Vertreter: Kohlmann, Kai

(57) **Zusammenfassung**

Die Erfindung betrifft einen Förderer (1) für ein Pulver/Gasgemisch mit mindestens einem flexiblen, elastisch verformbaren Schlauch (3), der an einer Stirnseite eine Ansaug- (6) und an der gegenüberliegenden Stirnseite eine Auslassöffnung (7) aufweist.

Um extrem feine Pulver zu fördern und gleichwohl eine Agglomerationen des Pulvers innerhalb des Förderers zu vermeiden, wird vorgeschlagen, dass der Schlauch zwischen der Ansaugöffnung und der Auslassöffnung von vier den Schlauchquerschnitt stützenden Ringen (8a-8d) in einen Einlassbereich, einen mittleren Bereich und einen Auslassbereich unterteilt ist und jedem Bereich Mittel zum zeitweiligen Abklemmen des Schlauchs zwischen zwei den jeweiligen Bereich begrenzenden Ringen zugeordnet sind.

## Beschreibung

Die Erfindung betrifft einen Förderer für ein Pulver-/Gasgemisch mit mindestens einem flexiblen Schlauch, der an einer Stirnseite eine Ansaug- und an der gegenüberliegenden Stirnseite eine Auslassöffnung aufweist.

Derartige Förderer werden insbesondere zur Zuführung dosierter Mengen von feinkörnigen Beschichtungspulvern in einen weiteren Arbeitsprozess verwendet, wobei das Pulver pneumatisch aus einem Pulverbehälter gefördert und unter Druck beispielsweise zu einer Sprühbeschichtungsanlage geführt wird. Bei derartigen Förderern müssen Pulverablagerungen und Agglomerationen des Pulvers in dem Förderer sowie den Pulverströmungswegen vermieden werden. Des Weiteren soll zur Förderung des Pulvers möglichst wenig Gas, insbesondere Luft erforderlich sein. Schließlich wird eine preiswerte und einfache Herstellung angestrebt.

In der DE 103 53 968 A1 wird bereits eine Beschichtungspulver-Fördervorrichtung offenbart, die eine Beschichtung mit wenig Fluidisier-Druckluft ermöglichen soll, wobei gleichzeitig Pulverablagerungen im Pulverförderweg vermieden werden sollen. Das Beschichtungspulver für die nachgeordnete Sprühbeschichtungsanlage wird mit einer Schlauchmembranpumpe gefördert, die das Beschichtungspulver mit einer kleinen Menge Druckluft pro Zeiteinheit vermischt und dadurch fluidisiert. Dabei braucht das Beschichtungspulver nicht mit soviel Druckluft pro Zeiteinheit fluidisiert zu werden, wie dies zur pneumatischen Förderung beispielsweise mittels eines Injektors nötig ist. Hiermit ist eine Druckluft- und Energieeinsparung zur Erzeugung der Druckluft verbunden. Die elastisch dehnbare Schlauchmembran ist in durchgehend gestrecktem hohlem Zustand in einer Förderkammer angeordnet, die eine ringartig die Schlauchmembran umgebende Druckkammer ausbildet. Die Förderkammer hat einen Pulvereinlass, in dem sich ein Pulvereinlassventil befindet und einen Pulverauslass, in dem sich ein Pulverauslassventil befindet. Eine Steuerung steuert die Zu- und Abfuhr von strömungsfähigem Medium in die die Schlauchmembran umgebende Druckkammer. Durch Zufuhr von Druckmedium in die Druckkammer wird die Schlauchmembran entgegen ihrer Elastizitätskraft zusammengedrückt und das Volumen in der Schlauchmembran verkleinert. Durch dieses Zusammendrücken der Schlauchmembran wird ein Druckhub erzeugt, der in der Schlauchmembran befindliches Pulver-Luftgemisch durch das Pulverauslassventil ausstößt, während das Pulvereinlassventil geschlossen ist. Durch Abfuhr von Druckmedium aus der ringartig die Schlauchmembran umgebenden Druckkammer verformt sich die Schlauchmembran aufgrund ihrer Elastizitätskraft zurück in ihre rohrartige Ausgangsform. Durch diese Rückverformung erzeugt die Schlauchmembran einen Saughub, durch den Beschichtungspulver und Gas durch das nunmehr offene Pulvereinlassventil in die Schlauchmembran angesaugt wird, während das Pulverauslassventil geschlossen ist. Das Pulverein- bzw. -auslassventil in Form einer Membran wird mittels der erzeugten Druckstöße geschlossen bzw. geöffnet. Bei der Förderung feiner Pulver scheitert die Reinigung der Membrane aufgrund der Druckstöße und es kommt zum Erliegen der Förderung durch Verstopfung. Darüber hinaus ist die genaue Abstimmung der Elastizität der Membrane abhängig von der Höhe der Druckstöße und dem zu fördernden Pulver technologisch schwierig.

Die Förderung extrem feiner Pulver mit Korngrößen von weniger als 15 µm ist mit der bekannten Beschichtungspulver-Fördervorrichtung kaum möglich. Unterhalb dieser Korngröße nehmen die Adhäsionskräfte zwischen den Pulverpartikeln erheblich zu. Die Oberfläche der Partikel vergrößert sich im Verhältnis zum Volumen erheblich. Ein Würfel mit einer Kantenlänge von 1 cm weist eine Oberfläche von 0,006 m² auf. Das gleiche Volumen mit Partikeln von fünf Nanometern Kantenlänge aufgefüllt, weist indes eine Oberfläche von 2.400 m² auf. Die starke Zunahme der Oberflächenkräfte erschwert die Förderung derart kleiner Partikel. Nur durch permanente Energieeinkopplung, insbesondere hohe Strömungsgeschwindigkeiten, die mit einem hohen Luftverbrauch einhergehen, kann ein Agglomerieren des Pulver-/Gasgemisches vermieden werden. Hohe Gasvolumenströme sind jedoch in verschiedenen nachgeschalteten Arbeitsprozessen, wie beispielsweise bei Plasma-Beschichtungsprozessen oder Laser-Beschichtungsprozessen, nachteilig. Darüber hinaus bedingen hohe Gasvolumenströme einen höheren Energieeinsatz für die Förderung. Außerdem gibt es nachgeschaltete Prozesse, bei denen das Pulver-/Gasgemisch die Verwendung von Inertgasen erfordert. Aufgrund der hohen Kosten von Inertgasen ist auch aus diesem Grund eine Reduktion des Gasverbrauchs wünschenswert.

Ein weiteres erhebliches Problem bei der Förderung extrem feiner Pulver besteht darin, dass Kanten und Einbauten im Strömungsweg zur Anhaftung des feinen Pulvers führen, die je nach Korngröße der Partikel sogar zum Erliegen der Förderung führen können.

Ausgehend von diesem Stand der Technik liegt der Erfindung daher die Aufgabe zu Grunde, einen Förderer für ein Pulver-/Gasgemisch der eingangs erwähnten Art zu schaffen, der die Förderung von extrem feinen Pulvern, insbesondere solche mit einer Korngröße von weniger als 15 µm erlaubt, bei dem gleichwohl Agglomerationen des Pulvers innerhalb des Förderers vermieden werden. Des Weiteren soll der Aufbau des Förderers vereinfacht und dessen Betrieb auch bei der Förderung von extrem feinen Pulvern mit einer geringen Gasmenge möglich sein.

Diese Aufgabe wird bei einem Förderer der eingangs erwähnten Art dadurch gelöst, dass der Schlauch zwischen der Ansaugöffnung und der Auslassöffnung von vier den Schlauchquerschnitt stützenden Ringen in einen Einlassbereich, einen mittleren Bereich und einen Auslassbereich unterteilt ist und jedem Bereich Mittel zum zeitweiligen Abklemmen des Schlauchs zwischen zwei den jeweiligen Bereich begrenzenden Ringen zugeordnet sind.

Die Aufteilung des sich entgegen seiner Elastizitätskraft verformbaren, insbesondere rohrförmigen flexiblen Schlauchs in drei durch Stützringe voneinander getrennte Bereiche in Verbindung mit den Mitteln zum zeitweiligen Abklemmen der einzelnen Bereiche ermöglicht es, vollständig auf die nach dem Stand der Technik erforderlichen Ein- und Auslassventile zu verzichten. Eine Agglomeration des Pulvers im Bereich der Ein- und Auslassventile wird damit sicher vermieden. Durch das Zusammendrücken des Schlauchs in einem der Bereiche entsteht ein Druckstoß. Sobald die Mittel zum zeitweiligen Abklemmen des Schlauchs inaktiv sind, nimmt dieser aufgrund der vorzugsweise hohen Rückstellkräfte in dem jeweiligen Bereich seine rohrförmige Ausgangsform wieder ein, so dass dort ein Unterdruck erzeugt wird. Der Unterdruck führt zu einem Ansaugen des Pulver-/Gasgemisches, während der Druckstoß zu einem Ausblasen des Pulver-/Gasgemisches in Richtung der Auslassöffnung des Förderers führt. Durch das vorzugsweise vollständige Abklemmen des Schlauchs bei dem der Schlauchdurchgang zwischen zwei Stützringen unterbunden ist, werden etwa vorhandene Agglomerate des Pulvers in den drei Bereichen des Förderers mechanisch aufgelöst. Die Auflösung der Agglomerate wird dabei durch die erzeugten Druckstöße, die sich durch den Förderer in Richtung der Auslassöffnung hindurchbewegen, unterstützt.

Der Ausgangsinnendurchmesser des Schlauchs vor dem Abklemmen beträgt je nach erforderlichem Volumenstrom und abhängig von dem zu fördernden Pulver vorzugsweise zwischen 0,5 bis 50 mm.

Die Stützringe sind vorzugsweise mit der Außenseite des Schlauchs verbunden, insbesondere stoffschlüssig, beispielsweise durch Verklebung. Die damit einbautenfreie Förderstrecke bietet dem Pulver-/Gasgemisch keine Möglichkeit zu Ablagerungen und Verwirbelungen. Gleichzeitig wird durch das Abklemmen des Schlauchs zwischen den jeweils durch zwei Ringe begrenzten Bereichen an dem Innenmantel anhaftendes Pulver abgelöst. Der Förderer ist damit selbstreinigend.

Durch die mehrfach über die Länge des Förderers eingeleiteten Druckwechsel lässt sich der Förderer mit geringen Gasmengen betreiben. Er ist daher insbesondere für solche Prozesse geeignet, bei denen anstelle von Luft beispielsweise ein Inertgas als Trägergas des Pulver-/Gasgemisches erforderlich ist.

Um den Schlauch zwischen den den jeweiligen Bereich begrenzenden Stützringen zeitweilig abzuklemmen, umgibt ein Gehäuse mit mindestens einer zylindrischen Höhlung den Schlauch, wobei die Höhlung eine Mantelfläche und stirnseitige Durchgänge für den Zugang zu der Ansaug- und Auslassöffnung des Schlauchs aufweist. Der Schlauch liegt im Bereich der Ringe bündig an der Mantelfläche der Höhlung an. Zwischen den ringförmigen Anlageflächen an der Mantelfläche ist jeweils mindestens eine Öffnung für die Zufuhr eines Druckmediums, insbesondere Druckluft, angeordnet.

Um die bündige Anlage des Schlauchs an der Mantelfläche der Höhlung zu verbessern, insbesondere um eine Trennung der einzeln druckbeaufschlagbaren drei Bereiche des Förderers zu gewährleisten, ist die mit der Mantelfläche der Höhlung in Kontakt stehende Oberfläche jedes Rings vorzugsweise mit einer Dichtung, insbesondere in Form eines Dichtrings, versehen.

Das Gehäuse ist zum einfachen Auswechseln des Schlauchs vorzugsweise zeitweilig ausgeführt. Die Gehäusehälften sind lösbar miteinander verbunden.

Die gezielte, insbesondere zeitversetzte Ansteuerung des Einlassbereichs, des mittleren Bereichs und des Auslassbereichs des Förderers erfolgt mit einer Steuerung für das Druckmedium, die einerseits mit einer Versorgung für ein Druckmedium, insbesondere einer Druckluftquelle, und andererseits mit den Öffnungen für die Zufuhr des Druckmediums in dem die zylindrische Höhlung aufweisenden Gehäuse verbunden ist.

Die Steuerung zum Abklemmen des Schlauchs, insbesondere mittels eines Druckmediums bewirkt, dass zunächst der mittlere Bereich und sodann zusätzlich der Einlassbereich geöffnet wird, während der Auslassbereich geschlossen ist. Sodann werden zunächst der Einlassbereich und anschließend der mittlere Bereich geschlossen während der Auslassbereich geöffnet bleibt. Sodann wird nach einer Haltezeit auch der Auslassbereich geschlossen, bevor der Steuerungszyklus wieder von vorn beginnt und der mittlere Bereich wieder geöffnet wird.

Die Zykluszeit des erfindungsgemäßen Förderers für einen Steuerungszyklus ist vorzugsweise kleiner 150 ms. Zur Ansteuerung der einzelnen Bereiche des Förderers dient eine Ventilsteuerung, die Magnetventile aufweist. Es handelt sich insbesondere um 3/2 Wegeventile, über die zugleich eine Druckbeaufschlagung und eine Druckreduktion möglich ist.

In vorteilhafter Ausgestaltung der Erfindung können zur Erhöhung des Gesamtvolumenstroms des Förderers die Auslassöffnungen mehrerer flexibler Schläuche über einen Auslassverteiler miteinander verbunden sein. Durch die Parallelschaltung der Auslassöffnungen der Schläuche kann bei zeitversetzter Ansteuerung der drei Bereiche jedes Schlauches das Pulsieren des sich aus den Teilströmen des Pulver-/Gasgemisches zusammensetzenden Gesamtstromes an dem Auslassverteiler deutlich reduziert werden. Die Steuerung der Schläuche wird vorzugsweise so bestimmt, dass sämtliche Schläuche während der Gesamtdauer eines Steuerungszyklus eines der Schläuche einmal entleert werden. Je höher die Anzahl der parallel geschalteten Schläuche des Förderers ist, desto weiter lässt sich das Pulsieren des sich aus den Teilströmen zusammensetzenden Gesamtstroms des Pulver-/Gasgemisches reduzieren.

In einer Anordnung mit mindestens zwei erfindungsgemäßen Förderern können diese in Reihe hintereinander geschaltet werden, so dass die Ansaug- und Auslassöffnungen der flexiblen Schläuche der hintereinander geschalteten Förderer miteinander verbunden sind. Durch die Kaskadierung von Förderern mit unterschiedlichen Fördervolumina und Ausgangsinnendurchmessern der Schläuche können grobe Agglomerate des Pulvers gefördert und sukzessiv aufgelöst werden. Das größerel Fördervolumen kann in den nachfolgenden Förderern auf mehrere Schläuche mit kleinerem Innendurchmesser aufgeteilt werden, um eine verbesserte Homogenität des Pulver-/Gasgemisches zu erzielen.

Alternativ zur Reihenschaltung mehrerer Förderer kann das Pulver-/Gasgemisch in einem Kreislauf gefördert werden, wenn jede Ansaugöffnung und jede Auslassöffnung eines ersten Förderers mit einem ersten Fördervolumen V1 über eine Ringleitung miteinander verbunden sind, in der das Pulver-/Gasgemisch teilweise im Kreislauf gefördert wird, in der Ringleitung in Förderrichtung vor dem ersten Förderer ein Speicher angeordnet ist, über den das Pulver (31) der Ringleitung (28) zuführbar ist, an der Ringleitung in Förderrichtung hinter dem ersten Förderer mindestens eine Abzweigleitung mit der Ansaugöffnung mindestens eines zweiten Förderers mit einem zweiten Fördervolumen V2 angeschlossen ist, wobei das Fördervolumen V2 jedes zweiten Förderers kleiner als das Fördervolumen V1 des ersten Förderers ist.

Bei einer derartigen Anordnung durchlaufen die Agglomerate und Pulverpartikel zumindest teilweise mehrfach den Förderer V1, bevor sie mittels des zweiten Förderers mit dem geringeren Fördervolumen V2 dem nachgeschalteten Arbeitsprozess zugeführt werden.

Durch die Reihenschaltung bzw. die Förderung des Pulver-/Gasgemisches in einem Kreislauf wird die Auflösung von Agglomeraten des Pulvers unterstützt.

Um die Druckpulse in dem geförderten Pulver-/Gasgemisch zu reduzieren, wird in vorteilhafter Ausgestaltung der Erfindung vorgeschlagen, dass die Auslassöffnungen von mindestens zwei Förderern miteinander fluchtend in dem Mantel eines Sammlers mit einem Ein- und einem Auslass münden, wobei dessen Einlass mit einer Zufuhr für ein zusätzliches Gas und dessen Auslass mit einem Verbraucher für das Pulver-/Gasgemisch verbindbar sind. Das dem Einlaß zugeführte Gas wird bevorzugt gepulst, wobei der Puls oder ein geradzahliges Vielfaches davon phasenverschoben zum Steuerzyklus der Pulverpumpe ist.

Nachfolgend wird die Erfindung anhand der Figuren näher erläutert. Es zeigen:
- **Figur 1a)**: einen Schlauch eines erfindungsgemäßen Förderers für ein Pulver-/Gasgemisch,
- **Figur 1b)**: eine Schnittdarstellung durch einen erfindungsgemäßen Förderer für ein Pulver-/Gasgemisch,
- **Figuren 2a)-c)**: ein Steuerzyklus des Förderers nach Figur 1b),
- **Figuren 3a)-g)**: eine schematische Darstellung der Förderung des Pulver-/Gasgemisches durch einen Förderer nach Figur 1b) mit einem Steuerzyklus gem. Figuren 2a)-d),
- **Figur 4a)**: eine zweite Ausführungsform eines erfindungsgemäßen Förderers mit vier parallel geschalteten Schläuchen,
- **Figur 4b)**: einen Signalverlauf der Steuerungssignale zur zeitversetzten Beaufschlagung der unterschiedlichen Bereiche der vier Schläuche des Förderers,
- **Figur 5)**: eine Anordnung mit insgesamt fünf erfindungsgemäßen Förderern von denen einer das Pulver-/Gasgemisch teilweise im Kreislauf fördert,
- **Figur 6a)**: eine Anordnung mit drei Förderern, die in Reihe geschaltet sind,
- **Figuren 6b)-e)**: Darstellungen zur Veranschaulichung der Effekte bei der Auflösung von Pulveragglomeraten in den erfindungsgemäßen Förderern,
- **Figur 7**: eine Anordnung mit mindestens zwei Förderern zur Reduktion der Druckpulse im geförderten Pulver-/Gasgemisch sowie

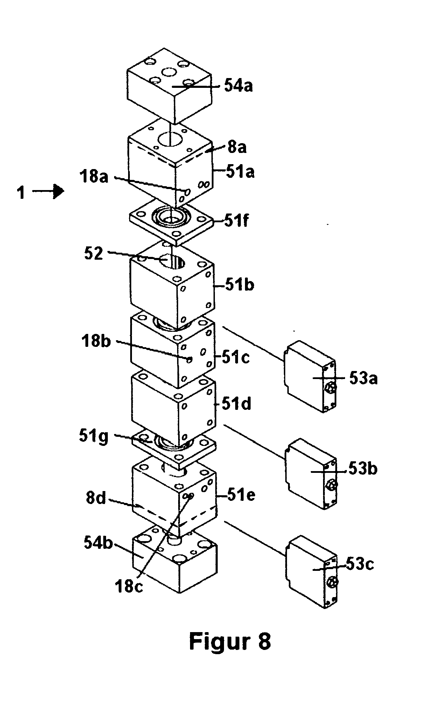

- **Figur 8**: eine Schnittdarstellung durch eine zweite Ausführungsform eines erfindungsgemäßen Förderers für ein Pulver-/Gasgemisch.

Der erfindungsgemäße Förderer (1) für ein extrem feines Pulver-/Gasgemisch (2) umfasst einen flexiblen Schlauch (3), der in einem Gehäuse (4) aus rigidem Material, insbesondere Stahl, angeordnet ist. Der Schlauch (3) weist einen Ausgangsinnendurchmesser (5) zwischen 0,5 bis 50 mm auf. Der vorzugsweise runde Ausgangsquerschnitt des Schlauchs (3) lässt sich gegen die elastischen Rückstellkräfte des flexiblen Materials des Schlauchs (3) durch gezieltes Abklemmen des Schlauchs reduzieren. Beim Abklemmen des Schlauchs (3) kommt es vorzugsweise zu einer Berührung von sich gegenüberliegenden Bereichen der Innenwand des Schlauchs (3). Durch geeignete Wahl des Schlauchmaterials können hohe Rückstellkräfte erzeugt werden. In Betracht kommen insbesondere Naturkautschuk sowie synthetische Kautschuke, wie beispielsweise EPDM (Ethylen-Propylen-Dien-Kautschuk), NBR (Nitril-Butadien-Kautschuk) oder SBR (Styrol-Butadien-Kautschuk).

Zwischen einer Ansaugöffnung (6) und einer Auslassöffnung (7) ist der Schlauch (3) durch vier den Schlauchquerschnitt stützende Ringe (8a-8d) in einen Einlassbereich (9), einen mittleren Bereich (10) und einen Auslassbereich (11) unterteilt. Im dargestellten Ausführungsbeispiel ist der mittlere Bereich etwa 50 % länger als der Ein- und Auslassbereich (9, 11). Diese Dimensionierung ist jedoch nicht zwingend erforderlich. Ebenso können die unterschiedlichen Bereiche eine übereinstimmende Länge aufweisen.

Die Ringe (8a-8d) umgeben den Schlauch (3) an dessen Außenseite (15) oder liegen an dessen Innenseite an. Um den Schlauchquerschnitt im Bereich der Ringe (8a-8d) zu stützen, sind die auf der Außenseite (15) aufliegenden Oberflächen der Ringe (8a-8d) mit der Außenseite (15) des Schlauchs (3) verklebt oder die Ringe sind in den Schlauch eingesetzt. Im Bereich der Ringe (8a-8d) ist daher ein Zusammendrücken des Schlauchs (3) unterbunden. Jeden Ring (8a-8d) umgibt darüber hinaus ein Dichtring (12a-d), der entweder unmittelbar auf dem Ring aufliegt oder im Bereich des Rings auf der Außenseite des Schlauchs.

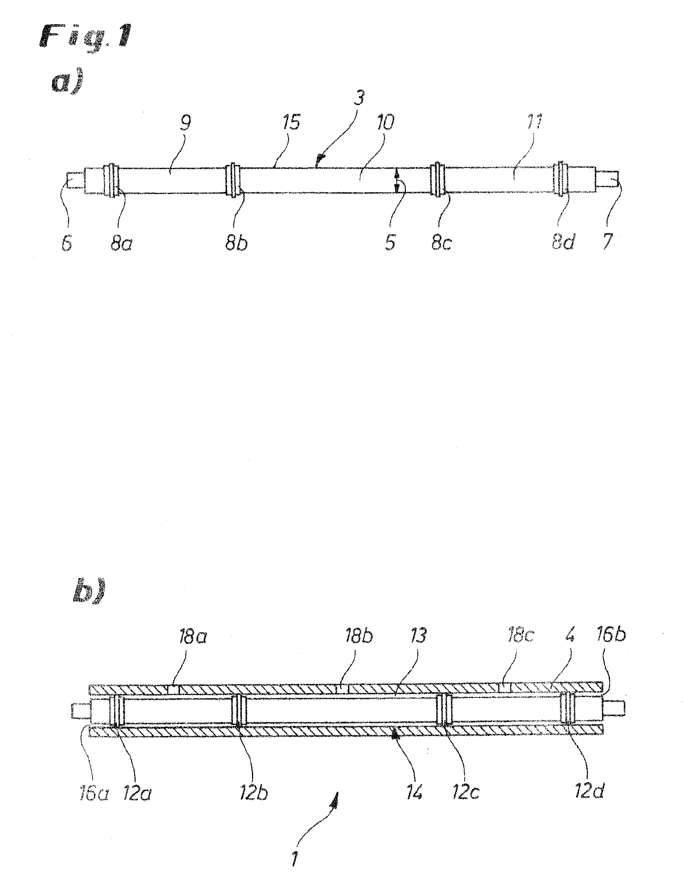

Der entsprechend Figur 1a in die drei Bereiche (9, 10, 11) unterteilte Schlauch (3) wird in das Gehäuse (4) eingesetzt, das zu diesem Zweck mindestens eine im Querschnitt kreisförmige zylindrische Höhlung (13) aufweist, deren Mantelfläche (14) zu der Außenseite (15) des Schlauches weist. Stirnseitig weist die zylindrische Höhlung (13) Durchgänge (16a, 16b) für den Zugang zu der Ansaugöffnung bzw. Auslassöffnung (6, 7) des Schlauches (3) auf, die dort entweder unmittelbar aus dem Gehäuse oder durch weiterführende Leitungen von der Ansaugöffnung (6) zu einem Vorratsbehälter und von der Auslassöffnung (7) zu einem weiterführenden Prozess aus dem Gehäuse (4) herausgeführt werden. Weist die Leitung von der Auslassöffnung (7) eine größere Länge, von insbesondere dem 10-fachen des Innendurchmessers auf, ist in der Leitung in vorteilhafter Ausgestaltung der Erfindung mindestens ein Einlass angeordnet, der mit einer gepulsten Druckquelle für ein Fördergas, z.B. Druckluft oder Inertgas, verbindbar ist. Die Druckpulse verhindern die Bildung von Agglomeraten in der Leitung bzw. lösen vorhandene Agglomerate auf. Mindestens ein Einlass befindet sich nahe der Auslassöffnung (7) im Mantel der Leitung.

Wie insbesondere aus der Schnittdarstellung nach Figur 1b) erkennbar, liegt der Schlauch (3) mit den Dichtringen (12a-12d) an der Mantelfläche (14) der Höhlung (13) an. Zwischen der Mantelfläche (14) und der Außenseite (15) des Schlauchs (3) wird hierdurch zwischen jeweils zwei benachbarten Stützringen (12a-12d) jeweils ein den Einlassbereich (9), den mittleren Bereich (10) und den Auslassbereich (11) umgebender Ringraum gebildet, der über mindestens eine Öffnung (18a-18c) mit einem Druckmedium, insbesondere Gas beaufschlagbar ist.

Zu diesem Zweck ist jede Öffnung (18a-18c) über eine Leitung für das Druckmedium mit einer vorzugsweise elektrisch ansteuerbaren Ventilsteuerung verbunden. Die Ventilsteuerung steht wiederum über eine Leitung mit einer Versorgung für das Druckmedium, insbesondere einer Druckluftquelle in Verbindung. Durch Beaufschlagen der Öffnungen (18a-18c) mit dem Druckmedium wird der Schlauch (3) zwischen den beiden, den jeweiligen Bereich (9, 10, 11) begrenzenden Ringen (8a-8d) abgeklemmt. Neben dem Abklemmen der unterschiedlichen Bereiche (9, 10, 11) des Schlauchs (3) mittels eines in dem Ringraum des Gehäuses (4) wirksamen Druckmediums kommen alternativ auch mechanische Mittel, beispielsweise über Nocken betätigte Kipphebel, die den Schlauch in den drei Bereichen zeitversetzt abklemmen, in Betracht. Die Betätigung mechanischer Mittel zum Abklemmen des Schlauchs können beispielsweise auch elektromagnetisch betätigt werden.

Die in Figur 1 b) dargestellte Ausführungsform ist jedoch wegen ihres robusten und einfachen Aufbaus zu bevorzugen. Das Gehäuse wird vorzugsweise zweischalig ausgeführt, um bei Verschleißerscheinungen des flexiblen Schlauchs dessen Wechsel problemlos durchführen zu können.

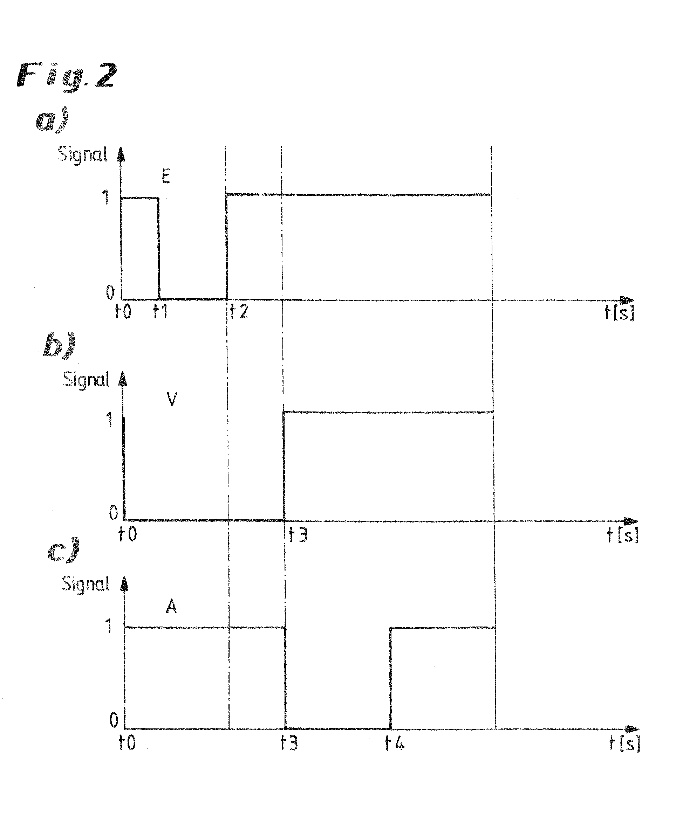

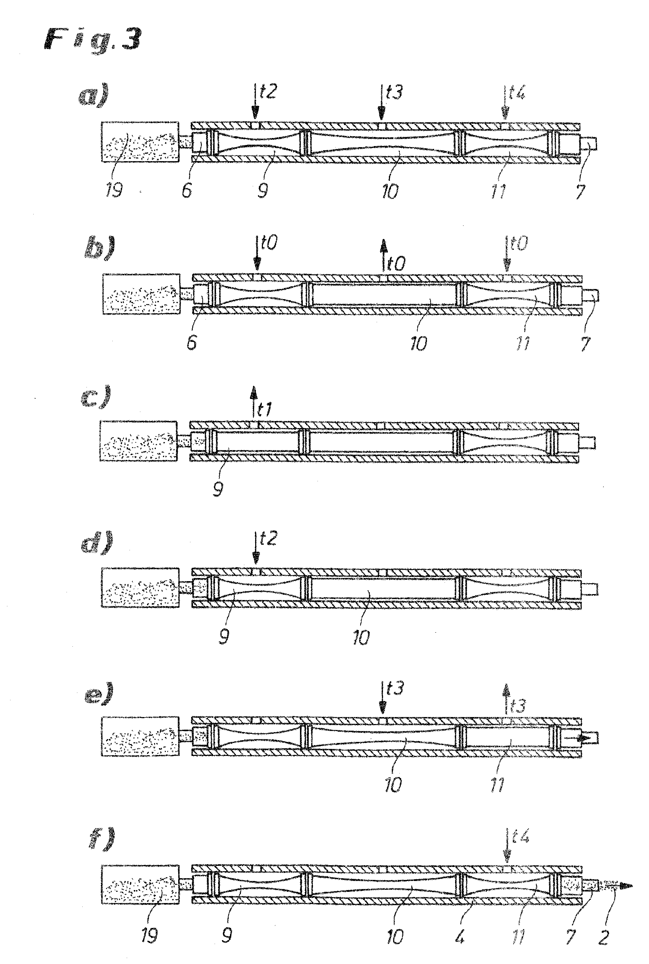

Anhand von Figuren 2 und 3 wird die Arbeitsweise des Förderers nach dem Ausführungsbeispiel gem. Figur 1b näher erläutert:
Die Figuren 2 zeigt den zeitlichen Verlauf der elektrischen Steuersignale der nicht dargestellten Ventilsteuerung, die zeitversetzt die Öffnungen (18a-18c) mit dem Druckmedium beaufschlagt bzw. von dem Druckmedium entlastet. Figur 2 a) zeigt den Signalverlauf für die Beaufschlagung des Einlassbereichs (9), Figur 2 b) zeigt den Signalverlauf für die Beaufschlagung des mittleren Bereichs (10) und Figur 2 c) den Signalverlauf für die Beaufschlagung des Auslassbereichs (11) mit Druckmedium.

Die Steuerung für das Druckmedium bewirkt, dass zum Zeitpunkt t0 der Einlassbereich (9)und der Auslassbereich (11) geschlossen sind, während der mittlere Bereich (10) geöffnet wird, wie dies in Figur 3 b) dargestellt ist.

Wenige ms später wird zum Zeitpunkt t1 der Einlassbereich (9) geöffnet, wie dies in Figur 3 c) dargestellt ist. Durch die Entlastung des Einlassbereichs (9) von dem Druckmedium zum Zeitpunkt t1 entsteht ein Unterdruckstoß und es wird über die Ansaugöffnung (6) Pulver-/Gasgemisch (2) in den Einlassbereich (9) gefördert.

Zum Zeitpunkt t2 wird der Einlassbereich (9) wieder geschlossen, wie dies aus Figur 3 d) erkennbar ist. Zur Zeit t2 wird durch Schließen des Einlassbereichs (9) das Pulver-/Gasgemisch (2) in den mittleren Bereich (10) gefördert.

Wenige ms später zum Zeitpunkt t3 wird der mittlere Bereich (10) geschlossen und gleichzeitig der Auslassbereich (11) geöffnet, wie dies aus Figur 3 e) erkennbar ist. Durch das Schließen des mittleren Bereichs (10) und die Entlastung des Auslassbereichs (11) von dem Druckmedium zum Zeitpunkt t3 wird das Pulver-/Gasgemisch (2) in den Auslassbereich (11) gefördert.

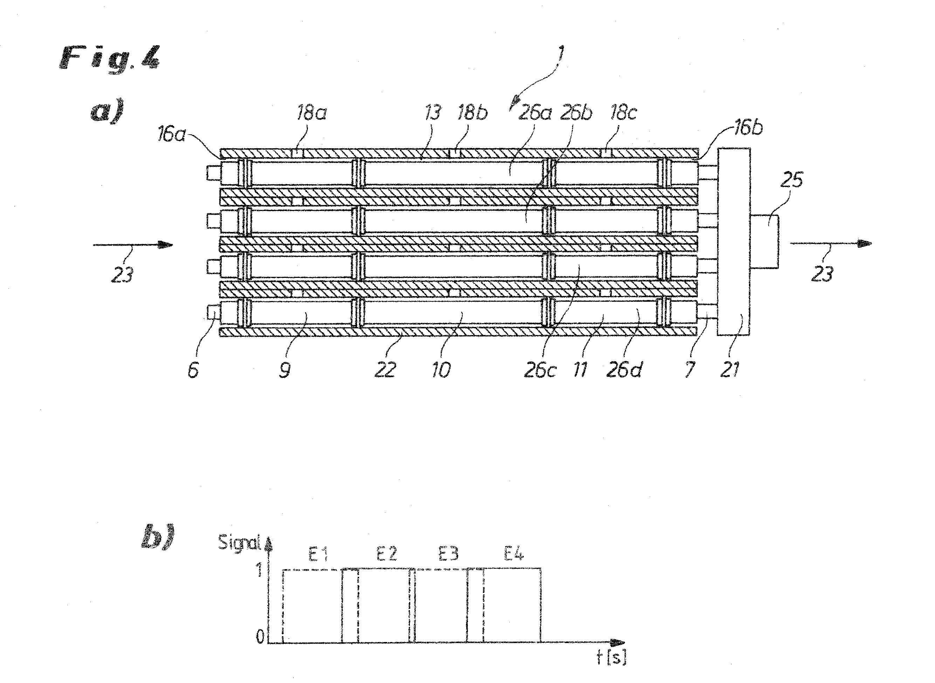

Zum Zeitpunkt t4 wird schließlich auch der Auslassbereich (11) verschlossen, so dass bis zum erneuten Beginn eines Steuerzyklus zum Zeitpunkt t0 der Einlassbereich (9), der mittlere Bereich (10) und der Auslassbereich (11) geschlossen sind. Beim Verschließen des Auslassbereichs (11) wird das Pulver-/Gasgemisch (2) aus dem Auslassbereich (11) gefördert Figur 4 zeigt eine zweite Ausführungsform des erfindungsgemäßen Förderers (1) bei dem die Ansaugöffnungen (6) von insgesamt vier Schläuchen (26a-26d) jeweils mit Pulver aus einem Speicher (19) versorgt werden, das in Förderrichtung (23) in die Ansaugöffnungen 6) der Schläuche (26 a-d) gelangt. Die Auslassöffnungen (7) der vier Schläuche (26a-26d) sind über einen Auslassverteiler (21) fluiddurchlässig miteinander verbunden. Die vier Schläuche (26a-26d) sind in einem gemeinsamen Gehäuse (22) in zylindrischen Höhlungen (13) untergebracht. Übereinstimmend wie bei dem Gehäuse (4) sind jedem Schlauch (26a-26d) Öffnungen (18a-18c) in dem Gehäuse (22) zugeordnet, über die individuell der Einlassbereich (9), der mittlere Bereich (10) und der Auslassbereich (11) jedes Schlauchs (26a-26d) von der nicht dargestellten Steuerung zeitversetzt mit Druckmedium beaufschlagbar ist.

Die Verbindung zwischen dem Auslassverteiler (21) mit den Auslassöffnungen (7) der Schläuche (26a-26d) erfolgt an den stirnseitigen Durchgängen (16) des Gehäuses (22). Der Auslassverteiler (21) weist einen zentralen Stutzen (25) auf, über den die in dem Auslassverteiler (21) zusammengeführten Teilströme des Pulver-/Gasgemisches (2) aus den vier Schläuchen (26a-26d) einem nachgelagerten Bearbeitungsprozess zugeführt werden.

Durch eine zeitlich versetzte Ansteuerung der drei Bereiche (9,10,11) der vier Schläuche (26a-26d) kann das Pulsieren des sich aus den vier Teilströmen zusammensetzenden Gesamtstroms des Pulver-/Gasgemisches deutlich reduziert werden. Der Steuerzyklus in den Schläuchen (26a-26d) wird derart gewählt, dass im Schlauch (26a) der Einlassbereich (9) mit Pulver-/Gasgemisch gefüllt wird, während im Schlauch (26d) der Auslassbereich (11) entleert wird. In Figur 4b) ist die Ansteuerung der unterschiedlichen Bereiche (9,10,11) der vier Schläuche (26a-26d) anhand der Signalbeaufschlagung des den Einlassbereich(9) der vier Schläuche ansteuernden Ventils der Ventilsteuerung dargestellt. Es ist erkennbar, dass die Einlassbereiche (9) zeitlich versetzt angesteuert werden. Die Gesamtzeit zur Ansteuerung der Einlassbereiche (9) der vier Schläuche (26a-26d) entspricht der Dauer des Förderzyklus des Pulver-/Gasgemisches (2) durch einen einzelnen Schlauch (26a-26d) des Förderers (1).

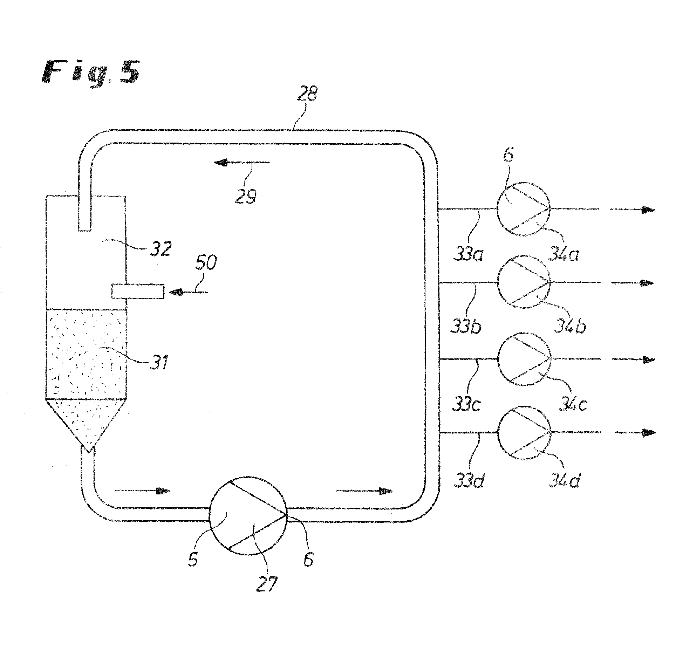

Figur 5 zeigt eine Anordnung mit insgesamt fünf erfindungsgemäßen Förderern, wobei die Ansaugöffnung (6) und die Auslassöffnung (7) eines ersten Förderers (27) mit einem ersten Fördervolumen V1 über eine Ringleitung (28) miteinander verbunden sind, in der das Pulver-/Gasgemisch (2) in Richtung des Pfeils teilweise im Kreislauf (29) gefördert wird und in Folge dessen den ersten Förderer (27) mehrmals durchläuft. In der Ringleitung (28) ist in Förderrichtung vor dem ersten Förderer (27) ein Speicher (32) angeordnet, über den das Pulver (31) der Ringleitung (28) zuführbar ist.

An der Ringleitung (28) sind hinter dem ersten Förderer (27) vier Abzweigleitungen (33a-33d) an den Ansaugöffnungen (6) von insgesamt vier weiteren Förderern (34a-34d) angeschlossen, wobei das Fördervolumen V2 der weiteren Förderer (34a-34d) kleiner als das Fördervolumen V1 des ersten Förderers (27) in der Ringleitung (28) ist.

Aus dem Speicher (32) wird kontinuierlich Pulver (31) entnommen, das der gewünschten Fördermenge an den vier Auslassöffnungen (7) der weiteren Förderer (34a-34d) entspricht. Des Weiteren wird eine definierte Menge an Pulver (31) in der Ringleitung (28) als Pulver-/Gasgemisch im Kreislauf (29) gefördert. Diese definierte Menge an Pulver (31) wird zunächst durch Aktivierung des ersten Förderers (27) in die Ringleitung (28) eingebracht. Die weiteren Förderer (34a-34d) sind in dieser Betriebsphase der Anordnung nach Figur 5 inaktiv. Sobald in dem Kreislauf (29) eine ausreichende Menge Pulver-/Gasgemisch (2) zirkuliert, werden die als Entnahmepumpe wirkenden weiteren Förderer (34a-34d) aktiviert. Die Abstimmung der von dem Speicher (32) zuzuführenden Volumenströme und der an den Förderern (34a-34d) zu entnehmenden Volumenströme wird durch die Dimensionierung der Leitungsdurchmesser, der Steuerzeiten der einzelnen Förderer sowie der Ausgangsinnendurchmesser der in den Förderern verwendeten Schläuche (3) abgestimmt. Die größeren Volumenströme in der Ringleitung (28) werden durch größere Leitungsquerschnitte gegenüber den Abzweigleitungen (33a-33d) ermöglicht. In dem Kreislauf (29) können daher größere Pulver-Agglomerate gefördert werden, die insbesondere durch mehrmaliges zirkulieren aufgelöst werden, so dass die kleiner dimensionierten weiteren Förderer (34a-34d) und deren im Querschnitt kleinere Abzweigleitungen (33a-33d) prozesssicher mit hinreichend feinem Pulver-/Gasgemisch (2) versorgt werden können. Die Auflockerung des Pulvers am Ausgang des Speichers (31) zur Ringleitung (28) erfolgt beispielsweise mechanisch. Der Zutritt für das Fördergas im Pulver-/Gasgemisch (2) ist mit der Positionsziffer (50) gekennzeichnet.

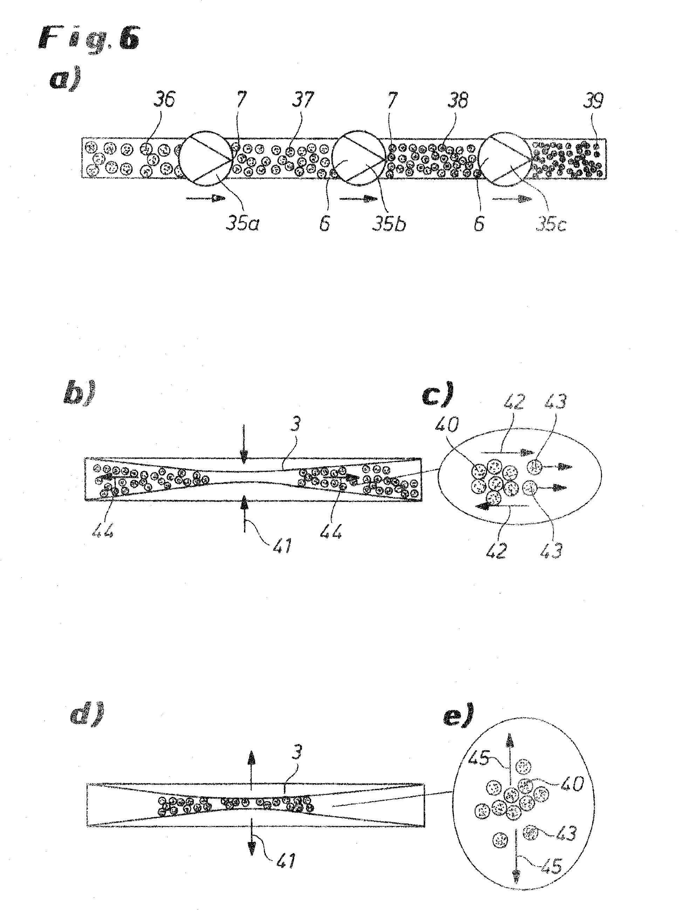

Figur 6 zeigt schließlich eine weitere Anordnung mit drei in Reihe zueinander angeordneten Förderern (35a-35c). Die Ansaugöffnung (6) des Förderers (35b) ist mit der Auslassöffnung (7) des Förderers (35a) verbunden. Die Auslassöffnung (7) des Förderers (35b) ist mit der Ansaugöffnung (6) des Förderers (35c) verbunden. Die Pulver-Agglomerate (36, 37, 38, 39) werden bei dem sequentiellen Durchlauf durch die drei Förderer (35a-35c) zunehmend aufgelöst und in ihrer Größe reduziert.

Die Größenreduktion der Pulver-Agglomerate in dem erfindungsgemäßen Förderern (1, 27, 34a-34d, 35a-35c) beruht im Wesentlichen auf zwei in den Figuren 6b)-e) dargestellten Effekten:
1. Beim Abklemmen der Schläuche (3, 26a-26d) in den Förderern(1, 27, 34a-34d, 35a-35c) werden Scherkräfte auf die Pulver-Agglomerate ausgeübt. Dabei entsteht Reibung zwischen den Pulverpartikeln der Agglomerate und zwischen den Pulverpartikeln und der Innenwand der Schläuche (3, 26a-26d).
   In Figur 6b) ist die Bewegungsrichtung (41) der Innenwand des Schlauchs (3) eines Förderers (1) dargestellt. In Folge der auf die Pulver-Agglomerate (40) wirkenden Scherkräfte (42) lösen sich einzelne Partikel (43) aus den Agglomeraten (40). Der beim Abklemmen des Schlauchs (3) entstehende Druckstoß verursacht den für die Erzeugung der Scherkräfte erforderlichen Druckgradienten (44) längs des Schlauchs (3).
2. Sobald die Druckbeaufschlagung des jeweiligen Bereichs (9,10,11) des Schlauches (3) aufgehoben wird, entsteht ein Unterdruck, der Kraftkomponenten (45) senkrecht zur Innenwand des Schlauches (3) ausübt. Diese Kraftkomponenten (45) wirken auch auf die Agglomerate (40), aus denen bei der Entlastung des Schlauches (3) Partikel (43) gelöst werden.

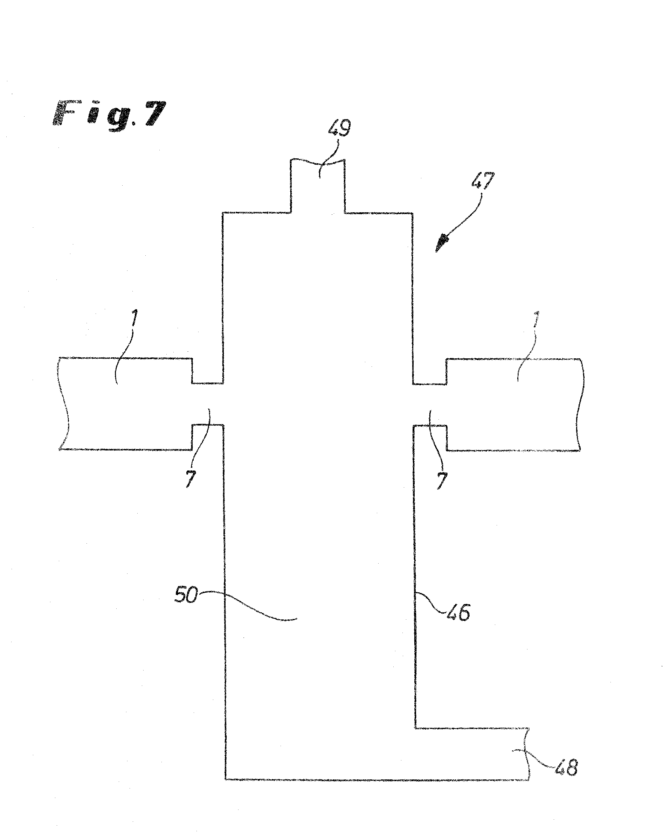

Um die Druckpulse in dem geförderten Pulver-/Gasgemisch zu reduzieren, wird in der Ausgestaltung der Erfindung nach Figur 7 vorgeschlagen, dass die Auslassöffnungen (7) von mindestens zwei Förderern (1) miteinander fluchtend in dem Mantel (46) eines Sammlers (47) mit einem Ein- und einem Auslass (48,49) münden, wobei dessen Einlass (48) mit einer Zufuhr für ein Verdünnungsgas, z.B. Luft, und dessen Auslass (49) mit einem Verbraucher für das Pulver-/Gasgemisch (2) verbindbar sind.

Die Mündungen der Auslassöffnungen (7) in dem Sammler, vorzugsweise ein Rohr, sind um 180 ° versetzt zueinander angeordnet. Der rechtwinklig zu den Mündungen angeordnete und mit diesen kommunizierende Durchgang (50) in dem Sammler (47) ist einerseits mit dem nicht dargestellten Verbraucher für das Pulver-/Gasgemisch (2) und andererseits mit der Zufuhr für das Fördergas verbunden.

Der Sammler ist vorzugsweise verbrauchernah anzuordnen, um ein erneutes Agglomerieren des Pulvers zu verhindern.

Die Abdichtung des Förderers (1) lässt sich konstruktiv vereinfachen, wenn das Gehäuse in Querrichtung in mehrere Gehäuseteile (51 a - g) unterteilt ist, die jeweils eine zylindrische Höhlung (52) aufweisen, durch die der Schlauch (3) hindurchführbar ist. Die Gehäuseteile (51 a - g) werden lösbar miteinander verbunden, so dass deren fluchtend zueinander ausgerichteten Höhlungen (52) einen Durchgang für den Schlauch bilden. Die Verbindung erfolgt beispielsweise mittels Stiften, die in entsprechende Öffnungen in den Grenzflächen zwischen zwei Gehäuseteilen eingreifen. Die Stifte werden in den Öffnungen mittels in Querbohrungen in die Gehäuseteile eindrehbaren Schrauben gesichert.

Die den Schlauch (3) stützenden Ringe (8a - d) sind als integraler Bestandteil der Gehäuseteile (51 a, e, f, g) ausgeführt. An den beiden stirnseitigen Gehäuseteilen (51 a, e) ist der Ring (8a, d) mündungsseitig in der Höhlung (52) angeordnet, die sich anschließend zum Einlassbereich (9) bzw. dem Auslassbereich (11) des Schlauchs (3)erweitert.

Der mittlere Bereich (10) des Schlauchs (3) wird von der Höhlung (52) von mindestens einem, im Ausführungsbeispiel jedoch drei mittleren Gehäuseteilen (51 b - d) im Abstand umgeben. Die dem mittleren Bereich zugeordneten Stützringe (8 b, c) werden von zwei scheibenförmigen Gehäuseteilen (51 f, g) gebildet, die zwischen den stirnseitigen Gehäuseteilen (51 a, e) und den drei mittleren Gehäuseteilen (51 b - d) angeordnet sind.

Der Mantel der Höhlung (52) der scheibenförmigen Gehäuseteile (51 f, g) liegt bündig an dem Schlauch (3) an und weist ggü. dessen Außendurchmesser, wie auch die anderen Ringe (8 a, d) ein Untermass von etwa 20 % auf, um die den Schlauch umgebenden Ringräume voneinander zu trennen.

Die Öffnungen (18 a - c) in den Gehäuseteilen (51 a, c, e) sind über drei pneumatische Ventile (53 a - c) mit einem Druckmedium zeitweilig beaufschlagbar, um die Bereiche (9 - 11) des Schlauchs (3) zeitversetzt mit Druckmedium zu beaufschlagen.

Auf die stirnseitigen Gehäuseteile (51 a, e) wird jeweils ein Endstück (54 a, b) aufgesetzt, um an den Förderer (1) Zu- und Ableitungen anschließen zu können.

**Bezugszeichenliste**

| **Nr.** | **Bezeichnung** | **Nr.** | **Bezeichnung** |
|---|---|---|---|
| 1 | Förderer | 29 | Kreislauf |
| 2 | Pulver-/Gasgemisch | 30 | -- |
| 3 | Schlauch | 31 | Pulver |
| 4 | Gehäuse | 32 | Speicher |
| 5 | Ausgang Innendurchmesser | 33a-d | Abzweigleitungen |
| 6 | Ansaugöffnung | 34a-d | weitere Förderer |
| 7 | Auslassöffnung | 35a-c | Förderer |
| 8a-d | Ringe | 36 | Pulveragglomerate |
| 9 | Einlassbereich | 37 | Pulveragglomerate |
| 10 | mittlerer Bereich | 38 | Pulveragglomerate |
| 11 | Auslassbereich | 39 | Pulveragglomerate |
| 12a-d | Dichtring | 40 | Pulveragglomerate |
| 13 | Höhlung | 41 | Bewegungsrichtung Schlauchinnenwand |
| 14 | Mantelfläche | 42 | Scherkräfte |
| 15 | Außenseite (Schlauch) | 43 | Partikel (Pulver) |
| 16 | Durchgänge | 44 | Druckgradient |
| 17a-c | Ringraum | 45 | Kraftkomponente |
| 18a-c | Öffnung | 46 | Mantel |
| 19 | Speicher | 47 | Sammler |
| 20 | -- | 48 | Einlass |
| 21 | Auslassverteiler | 49 | Auslass |
| 22 | Gehäuse | 50 | Gaszutritt Fördergas |
| 23 | Förderrichtung | 51 a - g | Gehäuse (teile) |
| 24 | -- | 52 | Höhlung |
| 25 | zentraler Stutzen | 50 | Gaszutritt Fördergas |
| 26a-d | Schlauch | 51 a - g | Gehäuse(teile) |
| 27 | erster Förderer | 52 | Höhlung |
| 28 | Ringleitung | 53 a - c | Ventile |
| | | 54 a, b | Endstücke |

## Patentansprüche

1. Förderer für ein Pulver-/Gasgemisch mit mindestens einem flexiblen, elastisch verformbaren Schlauch, der an einer Stirnseite eine Ansaug- und an der gegenüberliegenden Stirnseite eine Auslassöffnung aufweist, **dadurch gekennzeichnet, dass** der Schlauch (3) zwischen der Ansaugöffnung (6) und der Auslassöffnung (7) von vier den Schlauchquerschnitt stützenden Ringen (8 a-d) in einen Einlassbereich (9), einen mittleren Bereich (10) und einen Auslassbereich (11) unterteilt ist und jedem Bereich Mittel zum zeitweiligen Abklemmen des Schlauchs (3) zwischen zwei den jeweiligen Bereich begrenzenden Ringen (8 a-d) zugeordnet sind.

2. Förderer nach Anspruch 1, **dadurch gekennzeichnet, dass** der Ausgangsinnendurchmesser des Schlauchs vor dem Abklemmen zwischen 0,5 - 50 mm beträgt.

3. Förderer nach Anspruch 1 oder 2, **dadurch gekennzeichnet, dass** ein Gehäuse (4) mit mindestens einer zylindrischen Höhlung (13) mit einer Mantelfläche (14) und stirnseitigen Durchgängen (16a, b) für die Ansaug- und die Auslassöffnung (6, 7) den Schlauch (3) umgibt, wobei der Schlauch (3) im Bereich der Ringe (8 a-d) bündig an der Mantelfläche (14) der Höhlung (13) anliegt und zwischen den ringförmigen Anlageflächen an der Mantelfläche (14) jeweils mindestens eine Öffnung (18 a-c) für die Zufuhr eines Druckmediums angeordnet ist.

4. Förderer nach einem der Ansprüche 1 bis 3, **dadurch gekennzeichnet, dass** die Ringe (8 a-d) stoffschlüssig mit dem Schlauch (3) verbunden sind.

5. Förderer nach einem der Ansprüche 1 bis 4, **dadurch gekennzeichnet, dass** die Ringe (8 a-d) den Schlauch an der Außenseite (15) umgeben.

6. Förderer nach einem der Ansprüche 1 bis 4, **dadurch gekennzeichnet, dass** die Ringe (8 a-d) an der Innenseite des Schlauchs anliegen.

7. Förderer nach Anspruch 5, **dadurch gekennzeichnet, dass** die mit der Mantelfläche (14) der Höhlung (13) in Kontakt stehende Oberfläche jedes Rings (8 a-d) mit einer Dichtung (12 a-d) versehen ist.

8. Förderer nach Anspruch 6, **dadurch gekennzeichnet, dass** die mit der Mantelfläche (14) der Höhlung (13) in Kontakt stehende Oberfläche im Bereich jedes Rings (8 a-d) mit einer Dichtung (12 a-d) versehen ist.

9. Förderer nach einem der Ansprüche 1 bis 8, **dadurch gekennzeichnet, dass** die Auslassöffnungen (7) mehrerer flexibler Schläuche (26 a-d) über einen Auslassverteiler (21) miteinander verbunden sind.

10. Förderer nach einem der Ansprüche 3 bis 9, **dadurch gekennzeichnet, dass** der Förderer (1) eine Steuerung zur zeitversetzten Beaufschlagung des Einlassbereichs (9), des mittleren Bereichs (10) und des Auslassbereichs (11) jedes Schlauchs (3/26 a-d) aufweist, die einerseits mit einer Versorgung für ein Druckmedium und andererseits mit den Öffnungen (18 a-c) für die Zufuhr des Druckmediums in dem Gehäuse (4, 22) über Leitungen verbunden ist.

11. Anordnung mit mindestens zwei Förderern nach einem der Ansprüche 1 bis 10, **dadurch gekennzeichnet, dass** mehrere Förderer in Reihe geschaltet sind, so dass die Auslass- und Ansaugöffnungen (6, 7) der Schläuche (3) der in Reihe geschalteten Förderer miteinander verbunden sind.

12. Anordnung mit mindestens zwei Förderern nach einem der Ansprüche 1 bis 10, **dadurch gekennzeichnet, dass**
- jede Ansaugöffnung (6) und jede Auslassöffnung (7) eines ersten Förderers (27) mit einem ersten Fördervolumen V1 über eine Ringleitung (28) miteinander verbunden sind, in der das Pulver-/Gasgemisch (2) teilweise im Kreislauf (29) gefördert wird,
- in der Ringleitung (28) in Förderrichtung vor dem ersten Förderer (27) ein Speicher (32) angeordnet ist, über den das Pulver (31) der Ringleitung (28) zuführbar ist,
- an der Ringleitung (28) in Förderrichtung hinter dem ersten Förderer (27) mindestens eine Abzweigleitung (33 a-d) mit der Ansaugöffnung (6) mindestens eines zweiten Förderers (34 a-d) mit einem zweiten Fördervolumen V2 angeschlossen ist,
- wobei das Fördervolumen V2 jedes zweiten Förderers (34 a-d) kleiner als das Fördervolumen V1 des ersten Förderers (27) ist.

13. Anordnung mit mindestens zwei Förderern nach einem der Ansprüche 1 bis 10, **dadurch gekennzeichnet, dass** die Auslassöffnungen (7) von mindestens zwei Förderern miteinander fluchtend in dem Mantel eines Sammlers mit einem Ein- und einem Auslass münden, wobei dessen Einlass mit einer Zufuhr für ein Gas und dessen Auslass mit einem Verbraucher für das Pulver-/Gasgemisch (2) verbindbar sind.

14. Förderer nach einem der Ansprüche 1, 2 oder 5, **dadurch gekennzeichnet, dass** das Gehäuse des Förderers (51) in Querrichtung in mehrere Gehäuseteile (51 a - g) unterteilt ist, die jeweils eine zylindrische Höhlung (52) aufweisen, durch die der Schlauch (3) hindurchführbar ist und die den Schlauchquerschnitt (3) stützenden Ringe (8a - d) als integraler Bestandteil der Gehäuseteile (51 a, e) ausgeführt sind.

15. Förderer nach Anspruch 14, **dadurch gekennzeichnet, dass** an den beiden stirnseitigen Gehäuseteilen (51 a, e) der Ring (8a, d) mündungsseitig in der Höhlung (52) angeordnet ist.
